# EUROPÄISCHE PATENTSCHRIFT

(11) **EP 0 697 093 B1**
(45) Veröffentlichungstag und Bekanntmachung des Hinweises auf die Patenterteilung: **19.03.1997**
(21) Anmeldenummer: 94915015.5
(22) Anmeldetag: 06.05.1994
(51) Int. Cl.: F41H 5/04, C04B 35/584

(54) **KERAMISCHER WERKSTOFF UND EINE AUS DIESEM WERKSTOFF HERGESTELLTE PANZERPLATTE**
CERAMIC MATERIAL AND ARMOUR PLATE MADE THEREFROM
MATERIAU CERAMIQUE ET PLAQUE DE BLINDAGE REALISEE A L'AIDE DUDIT MATERIAU

(30) Priorität: 07.05.1993 DE 9306977 U
(43) Veröffentlichungstag der Anmeldung: 21.02.1996
(73) Patentinhaber: KENNAMETAL HERTEL AG Werkzeuge + Hartstoffe, 90766 Fürth (DE)
(72) Erfinder: SCHIEFER, Josef, D-91301 Forchheim (DE); TIEFHOLZ, Heinz, D-90552 Röthenbach-Heimendorf (DE)
(74) Vertreter: Tergau, Enno, Dipl.-Ing.
(86) Internationale Anmeldenummer: DE9400528
(87) Internationale Veröffentlichungsnummer: WO9427110

(56) Entgegenhaltungen:
- EP-A- 0 521 233
- WO-A-89/08626
- GB-A- 2 082 161
- US-A- 4 407 971
- US-A- 4 629 707
- DATABASE WPI Derwent Publications Ltd., London, GB; AN 86091548 & JP,A,61 038 865 (TOSHIBA) 24. Februar 1984
- DATABASE WPI Derwent Publications Ltd., London, GB; AN 92329636 & SU,A,1 968 236 (USSR URALS SCT KOMI RES CENTRE) 15. Dezember 1991

## Beschreibung

Die Erfindung betrifft die Verwendung eines keramischen Werkstoffs für die Herstellung einer Panzerplatte für ballistische Schutzpanzerungen. Derartige Panzerungen werden zum Personen- oder Sachschutz eingesetzt.

Ein sehr häufig für Panzerungen und insbesondere in Fahrzeugen verwendetes Material sind Stahlplatten. Diese haben jedoch den Nachteil, daß sie zur Erreichung der erwünschten Schutzwirkung eine relativ große Dicke aufweisen müssen. Üblicherweise sind solche Stahlplatten bis zu 10 cm stark. Damit ausgestattete Fahrzeuge sind dementsprechend schwer und müssen entsprechend aufwendige Motoren, Rahmen und Lagerungen etc. aufweisen.

Es wurden daher Schutzpanzerungen entwickelt, die weniger Gewicht aufweisen und auch zum Personenschutz in Form von kugelsicheren Westen etc. verwendet werden können. Derartige "Leichtbaupanzerungen" bestehen aus mehreren Schichten unterschiedlicher Materialien. Es sind beispielsweise Verbund-Panzerplatten bekannt, die aus relativ dünnen Metallplatten bestehen, zwischen die Keramikmaterialien eingelagert sind.

Die bisher zur Verfügung stehenden Keramikmaterialien weisen eine relativ geringe Stabilität und Schutzwirkung beim Auftreffen von Geschoßprojektilen auf und werden daher in der Regel nur im Verbund mit anderen Materialien, in "Sandwich-Bauweise" verwendet.

Davon ausgehend ist es die Aufgabe der Erfindung, ein Keramikmaterial für die Herstellung einer Panzerplatte zur verwenden und also eine Panzerplatte bereitzustellen, die eine gegenüber herkömmlichen Keramikmaterialien verbesserte Schutzwirkung gegen die Einwirkung von Geschoß-Projektilen aufweisen.

Die bisher für Schutzpanzerungen eingesetzten Keramikmaterialen sind beispielsweise Aluminiumoxid, Bor-, Silizium- und Wolframcarbide sowie Aluminium -, Bor- und Siliziumnitride. Die gängige Lehrmeinung war bisher, daß für Schutzpanzerungen geeignete Keramikmaterialien eine möglichst geringe Porosität aufweisen müssen, um die gewünschte Bruchfestigkeit bzw. Energieabsorptionsfähigkeit zu erhalten. Überraschenderweise hat sich nun gezeigt, daß die genannten Keramikmaterialien bzw. daraus hergestellte Panzerplatten eine gesteigerte ballistische Schutzwirkung haben, wenn sie eine Porosität aufweisen, die einem Bereich von 2-15 % liegt.

Die Verwendung eines keramischen Werkstoffs mit niedriegen Porosität für die Herstellung einer Panzerplatte ist aus WO-A-8 908 626 bekannt.

Dieses Dokument ist als der nächtsliegender Stand der Technik anzusehen.

Ein bevorzugtes Material ist Si₃N₄. Es zeichnet sich insbesondere dadurch aus, daß es ein relativ geringes spezifisches Gewicht hat und eine gegenüber anderen keramischen Materialien erhöhte Festigkeit bzw. Schutzwirkung aufweist. Das geringe Gewicht des genannten Materials ist insbesondere bei der Herstellung von mobilen Panzerungen, etwa von kugelsicheren Schutzwesten, von Bedeutung. Es können aber prinzipiell auch Materialien, wie BN, AIN, TiB₂, B₄C, SiC, WC, Sialone, Verwendung finden. MgO, Al₂O₃, Y2O3, ZrO₂ oder Oxide der seltenen Erden kommen ebenfalls infrage.

Während bei Materialien wie Aluminiumoxid oder Borcarbid eine Sinterung ohne Zusatzstoffe möglich ist, müssen bei Materialien wie Siliziumnitrid Sinterhilfsmittel zugegeben werden, um eine ausreichende Verbindung der Einzelkörner des Ausgangsmaterials zu erhalten. Nach Anspruch 4 bzw. Anspruch 11 werden Aluminiumoxid und/oder Yttriumoxid vorgeschlagen. Es können aber auch Stoffe wie MgO, Oxide der seltenen Erden etc. Verwendung finden. Als besonders vorteilhaft hat sich ein Anteil dieser Sinterhilfsmittel von 0,5-15 Gew.% herausgstellt. Weitere vorteilhafte Ausführungsformen der Erfindung sind in den Unteransprüchen 5-7 und 12-14 angegeben.

Die erfindungsgemäßen Werkstoffe bzw. Panzerplatten eignen sich für Panzerplatten bzw. Panzerungen, die nur aus Keramikmaterial bestehen oder die unter Verwendung des erfindungsgemäßen Werkstoffs hergestellte Verbundmaterialien sind.

Die Herstellung der erfindungsgemäßen keramischen Werkstoffe basiert auf herkömmlichen Standardmethoden. Die Ausgangsmischung kann beispielsweise mit dem Heißpreßverfahren oder auch mit dem Gasdruck-Sinterverfahren weiter verarbeitet werden. Die Herstellung wird anhand des folgenden Beispiels exemplarisch erläutert:

Es werden 93 Gew.-% Si₃N₄, 6 Gew.-% Y₂O₃ und 1 Gew.-% Al₂O₃ in einer Trommelmühle 24 Stunden lang auf eine Korngröße < 1µm gemahlen. Die Ausgangsstoffe liegen in einer Reinheit von mindestens 99,5% vor. Als Mahlmedium wird Ethanol verwendet. Nach dem Mahlen wird die Masse getrocknet und granuliert. Anschließend wird die Masse auf einer Trockenpresse zu plattenförmigen Vorformlingen verpreßt. Die Vorformlinge werden bei ca. 1850 bis 1900°C bei einer Haltezeit von 0,5 Stunden in einer Stickstoffatmosphäre von 5 bis 10 bar gesintert.

Zur Ermittlung der Schutzwirkung des erfindungsgemäßen Materials wurden vergleichende Versuche mit unterschiedlichen ballistischen Schutzmaterialien durchgeführt. Eine Schutzpanzerung aus dem erfindungsgemäßen Material mit einer Dicke von ca. 1 cm zeigt gegenüber den Referenzmaterialien bzw. -platten mit vergleichbarer Dicke eine deutlich erhöhte Absorptionsfähigkeit für die Energie auftreffender Projektile. Besonders zu beachten ist der Vergleich mit einem dichten Si₃N₄-Material. Während dieses herkömmliche Siliziumnitrid eine Gesamtenergie-Absorption (in %/kg) von etwa 1,1 aufweist, ist der Wert für das erfindungsgemäße Material etwa doppelt so hoch. Das erfindungsgemäße Material weist die Porosität des Materials verursachende Hohlräume auf. Die Kömer des keramischen Grundmaterials sind untereinander über "Brücken" miteinander verbunden und stützen sich an diesen Verbindungsstellen gegenseitig einander ab.

Der Entstehung der "Brücken" liegen je nach Art des verwendeten keramischen Materials unterschiedliche Sintermechanismen zugrunde. Bei Materialien wie Aluminiumoxid oder Borcarbid erfolgt die Verbindung der Einzelkörner zu einem Raum-Netzwerk durch Feststoff-Diffusionsvorgänge. Bei Materialien wie Siliziumnitrid findet dagegen unter Zusatz von Sinterhilfsmitteln eine sog. Flüssigphasensinterung statt. Dabei verflüssigen sich die Sinteradditive bei der erhöhten Termperatur des Sinterprozesses unter Bildung einer Schmelzphase. Nach dem Abkühlen gehen diese Schmelzphasen in den festen Zustand über und verbinden die Keramikkörner bzw. -kristalle untereinander nach Art eines dreidimensionalen Netzwerkes. Es wird angenommen, daß dieses auf die eine oder andere oben beschriebene Art entstandene Netzwerk aus Keramikkörnem bzw. -kristallen verantwortlich ist für die gesteigerte ballistische Widerstandsfähigkeit. Beim Auftreffen eines Projektils wird die dabei freiwerdende mechanische Energie vom Einschlagpunkt aus in das Netzwerk weitergeleitet und dadurch großflächig bzw. großräumig verteilt. Das dreidimenionale Netzwerk des erfindungsgemäßen Keramikmaterials besitzt aufgrund seiner Netzwerksrtuktur auch eine erhöhte Schwingungsfähigkeit, die für den beobachteten Energieabsorptions- und -verteilungseffekt ebenfalls mitverantwortlich sein dürfte.

Bei den erfindungsgemäßen Werkstoffen wurde auch eine hohe Temperaturwechselbeständigkeit beobachtet. Dieser Eigenschaft dürften die gleichen Ursachen zugrundeliegen, wie der der gesteigerten ballistischen Schutzwirkung.

## Patentansprüche

1. Verwendung eines keramischen Werkstoffs mit einer Porosität von 8% bis 15% für die Herstellung von ballistischen Panzerungen, insbesondere von Panzerplatten.

2. Verwendung nach Anspruch 1,
dadurch gekennzeichnet,
daß das keramische Material Si₃N₄ ist.

3. Verwendung nach Anspruch 2,
dadurch gekennzeichnet,
daß der Werkstoff einen Anteil an Sinterhilfsmitteln von 0,5-15 Gew.% enthält.

4. Verwendung nach Anspruch 3,
dadurch gekennzeichnet,
daß das Sinterhilfsmittel Y₂O₃ und/oder Al₂O₃ ist.

5. Verwendung nach einem der Ansprüche 1-4,
dadurch gekennzeichnet,
daß der Werkstoff eine Porosität von 8-10% aufweist.

6. Verwendung nach einem der Ansprüche 1-6,
dadurch gekennzeichnet,
daß der Werkstoff 94 Gew.% Si₃N₄, 5 Gew.% Y₂O₃ und 1 Gew.% Al₂O₃ enthält und eine Porosität von 8 % aufweist.

## Claims

1. Use of a ceramic material having a porosity of from 8 % to 15 % for the production of ballistic armouring, in particular armour plates.

2. Use according to Claim 1, characterized in that the ceramic material is Si₃N₄.

3. Use according to Claim 2, characterized in that the material contains a proportion of sintering aids of 0.5-15 % by weight.

4. Use according to Claim 3, characterized in that the sintering aid is Y₂O₃ and/or Al₂O₃.

5. Use according to any of Claims 1-4, characterized in that the material has a porosity of 8-10 %.

6. Use according to any of Claims 1-5 characterized in that the material contains 94 % by weight of Si₃N₄, 5 % by weight of Y₂O₃ and 1 % by weight of Al₂O₃ and has a porosity of 8 %.

## Revendications

1. Utilisation d'un matériau céramique ayant une porosité de 8 % à 15 % pour la fabrication de blindages balistiques, en particulier de plaques de blindage.

2. Utilisation selon la revendication 1, caractérisée en ce que le matériau céramique est Si₃N₄.

3. Utilisation selon la revendication 2, caractérisée en ce que le matériau contient une proportion d'auxiliaires de frittage de 0,5-15 % en masse.

4. Utilisation selon la revendication 3, caractérisée en ce que l'auxiliaire de frittage est Y₂O₃ et/ou Al₂O₃.

5. Utilisation selon l'une des revendications 1 à 4, caractérisée en ce que le matériau présente une porosité de 8-10 %.

6. Utilisation selon l'une des revendications 1 à 5, caractérisée en ce que le matériau contient 94 % en masse de Si₃N₄, 5 % en masse de Y₂O₃ et 1 % en masse de Al₂O₃ et présente une porosité de 8 %.
